# EUROPEAN PATENT SPECIFICATION

(11) **EP 4 631 211 B1**
(45) Date of publication and mention of the grant of the patent: **23.09.2026**
(21) Application number: 23821752.5
(22) Date of filing: 08.12.2023
(51) Int. Cl.: H04L 9/32

(54) **METHOD FOR ELECTRONIC SIGNING WITH MULTIPLE SIGNING KEYS ALLOWING PROOF OF USING SAME POSSESSION FACTOR**
VERFAHREN ZUR ELEKTRONISCHEN UNTERZEICHNUNG MIT MEHREREN UNTERZEICHNUNGSSCHLÜSSELN, DIE DEN NACHWEIS DER VERWENDUNG DES GLEICHEN BESITZFAKTORS ERLAUBEN
PROCÉDÉ DE SIGNATURE ÉLECTRONIQUE À CLÉS DE SIGNATURE MULTIPLES PERMETTANT UNE PREUVE D'UTILISATION DU MÊME FACTEUR DE POSSESSION

(30) Priority: 10.12.2022 NL 1044483
(43) Date of publication of application: 15.10.2025
(73) Proprietor: Wellet B.V., 3743 AR Baarn (NL)
(72) Inventor: VERHEUL, Eric Robert, 3743 AR Baarn (NL)
(74) Representative: Nederlandsch Octrooibureau
(86) International application number: PCT/NL2023/050646
(87) International publication number: WO 2024/123181

(56) References cited:
- WO-A1-2022/050833
- US-A1- 2015 095 999
- VERHEUL ERIC R: "SECDSA: Mobile signing and authentication under classical "sole control"", 19 July 2021 (2021-07-19), XP093054664, Retrieved from the Internet <URL:https://web.archive.org/web/20210719192530if_/https://eprint.iacr.org/2021/910.pdf> [retrieved on 20230615]

## Description

### 1. Field of the Invention

This disclosure relates to a method enabling a user to generate a public/private keypair, a method for verifying such a keypair, as well as to related systems, computer programs, and memory devices.

### 2. Background

In a Public Key Infrastructure (PKI) a certificate binds a user public key (cf. [STINSON]) to particular user attributes. In essence a certificate is an electronic message holding the user public key and the attributes that is electronically signed by a trusted party (Issuer) and provided to the user. The user can present such a certificate to a relying party that validates the certificate signature and lets the user prove it has possession of the private key corresponding to the user public key that is bound to the certificate. Such proof of possession typically consists of letting the user sign a random challenge generated by the relying party. When all validations are successful the relying party can conclude the attributes apply to the user.

The X.509 standard [X.509] is a technical standard for certificates. In the context of the eIDAS regulation update [eIDAS-update] such certificates are also known as attribute attestations which could be implemented through the X.509 standard, but also through other standards like the mdoc format from [ISO 18013-5] and the Verifiable Credentials specified in [VC]. In this document we use the term certificate in a broad way pertaining to any mechanism binding user attributes to one or more user public keys using a message signed by a (trusted) issuer.

The above section is provided for information only. None of the above should be interpreted as being prior art and/or common general knowledge.

Verheul Eric R: "SECDSA: Mobile signing and authentication under classical "sole control"", 19 July 2021 URL:https://web.archive.org/web/20210719192530if /https://eprint.iacr.org/2021 /910.pdf discloses a related method. The content of this paper is substantially the same reference [SECDSA] discussed in the detailed description.

### 3. Summary of the Invention

### 3.1 Problem statement

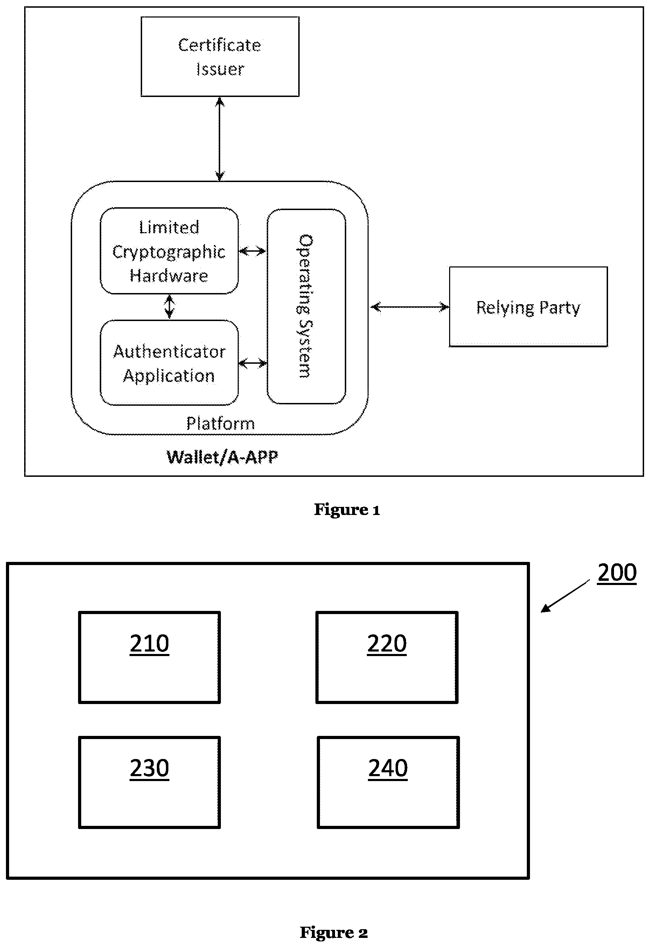

For the user management of the certificates, e.g., the issuance of certificates by issuers, the presentation of certificates to relying parties and proving possession of private keys, the user requires an application that resides on a hardware platform, e.g., a mobile device. This application is called A-APP in the context of the Dutch patent [SECDSA]. In this context, as indicated in Figure 1, the platform is equipped with cryptographic hardware called Secure Cryptographic Environment (SCE). Such hardware allows generation of (signing) keys in a secure (i.e., "random") non-exportable, non-copyable fashion. In the context of the eIDAS regulation update [eIDAS-update] the application managing the certificates is called the European Digital Identity (EDI) Wallet. Where in Dutch patent [SECDSA] a party called Authentication Provider actively facilitates the A-APP with certificate management this is not the case in this document. This corresponds to the so-called offline use cases of the EDI Wallet.

Generically the certificate issuance process follows two steps:
1. the user proves to the issuer he/she has possession of the private key corresponding to the public key; this is typically done by letting the user sign a random challenge generated by the issuer with this private key.
2*.* the issuer assesses that the intended attributes indeed apply to the user.

The certificate usage process generically also follows two steps:
1. The user presents its certificate to a relying party which validates it is properly signed and not revoked.
2. The user proves he/she has possession of the private key corresponding to the public key in the certificate; this is typically done by letting the user sign a random challenge generated by the relying party with this private key.

When these two steps are successfully performed, the relying party can conclude that the attributes in the certificate apply to the user.

A prominent certificate in this context is one that holds information that fully and directly identifies the user like the user's full name, date of birth, place of birth and possible other identifying identification like a social security number. Such certificates are known as PID (Person Identification Data) attribute attestations in the context of the 2021 proposed update [eIDAS-update] of the 2014 European eIDAS regulation [eIDAS-2014]. The PID certificate can be based on a physical issuance process or closely related to that (e.g. by using a national eID card), but all other certificates could be issued based on presenting the PID certificate. To illustrate, a certificate holding a user diploma could be issued to a user in an online fashion by an educational organization after the user has successfully presented her PID certificate. That is, the diploma issuer first acts as a relying party for the PID certificate on basis of which the diploma certificate is then issued.

Dutch patent [SECDSA] describes a method whereby for some electronic signature algorithms, most notably the ECDSA algorithm [DSA], the user private signing key *p* can be chosen as the product of two other private keys: a possession private key *u* and a second private key *K* based on other possession, knowledge (password/PIN), biometric or other information. Both private keys are non-zero by their nature. In signature schemes based on an elliptic curve group generated by a generator *G,* the private signing key *p* and resulting public key *P* take the following form: $p = K . u ; P = p . G = K . u . G = K . U$

The skilled person appreciates that the elliptic curve group is an additive group (<G>, +) generated by a generator *G* and where for any natural number scalar *n* and element *H* ∈ 〈*G*〉 the (point) multiplication, denoted by *n* · *H* or *n. H* is defined as adding *H n-*times, e.g. 2 *· H = H + H.*

Here *U* = *u*. *G* is the possession public key and - as stated before - *u* is the possession private key. Similar formulae hold for other groups the signature algorithms from [DSA] can be based on. The possession private key *u* (and by extension the possession public key *U*) is strongly bound to the user platform by having it managed in non-exportable and non-copyable fashion in cryptographic hardware in possession of the user. That is the A-APP/user can instruct the hardware to securely and randomly generate such a possession private key and can also instruct the hardware to sign with it, but this private key cannot be exported in plaintext from the hardware or copied to another piece of cryptographic hardware.

The resulting user private key *p* equals *K. u,* i.e., is the product of the keys *K,* u where this multiplication is to be understood modulo the order *q* of the group on which the signature scheme is based. The corresponding public key *P* takes the form *K. u. G* where *G* is the generator of the group the signature scheme is based on. Note that *P = K. U* where *U* = *u. G* is known as the possession public key. Moreover, the method in Dutch patent [SECDSA] also comprises of a method allowing a signature of the private signing key on a message M to be performed in such a way that the user does not require direct access to the possession private key; only the ability to sign with this key suffices. In more detail this method may be specified in Algorithm 1 below; here *q* denotes the order of the group the signature scheme is based on and *H*(.) is a suitable hash function, e.g. the SHA256 hash function from [NIST-180-4] when using the P-256 elliptic curve from [DSA]. The operation *k ε_{R}*[1*, q* - 1] stands for randomly selecting a number k from the set of integers {1, 2,*... , q* - 1}*.*
**Algorithm 1:** Split-ECDSA signature generation
Input: message *M,* private possession key *u,* second private key *K .*
Output: ECDSA ssignature (*r, s*) for private key *K. u*
1. Compute *H*(*M*) and convert this to an integer e.
2. Compute *e*' = *K*^{*-*1} *· e* mod*q*.
3. Select *k ε_{R}*[1, *q* - 1].
4. Compute *kG* = (*x, y*) and convert *x* to an integer *x̅*.
5. Compute *r* = *x̅* mod q . If r = 0 then go to Step 1.
6. Compute *s*₀ = *k*⁻¹(*e'* + *u · r*) mod *q.* If *s* = 0 then go to Step 3.
7. Compute *s* = *K · s*₀ *mod q.*
8. Return signature (*r*, *s*).

As follows from Dutch patent [SECDSA] (*r, s*) is indeed a valid ECDSA signature for the public key *P* with private key *K. u,* i.e., the product of the keys *K, u* where is to be understood modulo the order of the group on which the signature scheme is based.

Algorithm 1 can also be based on other digital signature algorithms that allow feeding the signature generation algorithm with a pre-computed hash value. This for instance is the case for DSA (non-elliptic curve variant EC-DSA), EC-GDSA and EC-RDSA from [ISO-14888-3].

Suppose the user possesses a public key as constructed above as indicated in Equation (1), i.e. of the form *P = K. u. G = K. U* where *U* = *u*. *G* with *u* stored in user cryptographic hardware and not known by the user. As explained in Dutch patent [SECDSA] a relying party can verify that *P* indeed is correctly formed. In the protocol below we discuss one way of doing this on which many variations and/or alternatives are available to the skilled person. For example, certain variations and/or alternatives are indicated below the protocol.

### Protocol 1: Proving public key P is correctly formed by relying party

1. The user deploys a so-called key attestation mechanism whereby the cryptographic hardware itself will issue an attestation on the public key *U* whereby a trusted party, e.g., the hardware supplier, attests to this. Effectively such attestations are messages signed by the trusted party holding the public key *U* and an attestation statement like "the private key corresponding to public key *U* is maintained in non-exportable, non-copyable fashion in the user cryptographic hardware". We note that the attestation process typically, but not necessarily, also takes as input a random challenge generated by the relying party and sent to the user; this challenge is then part of the attestation statement allowing for its freshness.
2. The user sends public key *U* together with the attestation result to the relying party and proves possession of the corresponding private key u corresponding to public key *U.* This can for instance be done by signing a random challenge generated by the relying party and sent to the user. Note this corresponds to a call of the user/A-APP to the cryptographic hardware to generate this signature.
3. The user generates a proof of possession of the private key *K,* i.e. the discrete logarithms of *P* with respect to *U.* See [STINSON], based on the proof of knowledge techniques of [SCHNORR] combined with [FIAT]. We note that this process typically also takes as input a random challenge generated by the relying party and sent to the user; this challenge is then part of the proof of possession sent by the user to the relying party.
4. By verifying the results from Steps 1-3, the relying party can then assess that the public key *P* is indeed correctly formed as indicated in Equation (1).

We indicate some variations and alternatives on Protocol 1. One can use different attestation mechanisms than based on electronically signed 'key attestation certificates' as is done in Steps 1-2. For instance, the relying party could alternatively set up a secure tunnel to the cryptographic hardware, for instance using the Extended Access Control protocol used in electronic passports (ICAO document 9303), over which the hardware then sends the public key U to the relying party. The secure tunnel then attests to the relying party that public key U is authentic, i.e. that the corresponding private key u resides in the hardware. In Steps 2 and 3 of Protocol 1 one can use any technique allowing the user to prove knowledge of the discrete logarithm K of *P* with respect to *U.* For example, one can use any digital signature scheme for instance those from [ISO-14888-3] in which K acts as the private key, K.U as the public key and U as the group generator of the scheme; a signature on a message (challenge) from the relying party by the user then constitutes as such a proof of knowledge. In Steps 2 and 3 of Protocol 1 one can alternatively use a different mechanism than signing to prove possession of the private key *u.* For instance, one can proceed as in electronic passports (ICAO document 9303) whereby a cryptographic key between the user/hardware and the relying party is agreed using the Diffie-Hellman protocol (see [STINSON]) in which U (Step 2) or K.U (Step 3) acts as the static public key of the hardware. Knowledge of this shared key and thus of private key u (Step2) or K (Step 3) is then proven to the relying party by generating a message authentication code (MAC) using the shared key. Unlike with signing the use of a MAC allows the user to later deny this ever happened which in some circumstance can be a beneficial privacy property.

A convenient approach is to apply Protocol 1 only once during the issuance process of a certificate holding the public key *P* and letting the issued certificate, most notably the PID certificate, indicate that the issuer has indeed validated that the public key is properly formed, i.e. as indicated in Equation (1). That is, that it is backed by cryptographic hardware by the private possession key u based on the method of Dutch patent [SECDSA]. Then by inspecting the certificate, a relying party would also be able to conclude that the user public key indeed is correctly formed as the issuer vouches for this.

Although the methods described in Dutch patent [SECDSA] work well, certain issues may remain and/or improvements may be possible. For example, it may be desirable to further enhance user privacy while maintaining security.

Suppose a user has public key *P* and private key *p* formed according to Equation (1). Also suppose the user has a proof that public key *P* is indeed formed according to Equation (1), e.g. by having followed Protocol 1 or by having a certificate *C* on public key *P* possibly also holding user attributes indicating that public key *P* is indeed formed according to Equation (1).

In practical applications it is important that a relying party can verify that certificates *C*₁*, C*₂ ... , *Cₙ* are also based on the same possession private key, i.e., that *u*₁ = *u*₂ = ... = *uₙ* = *u* or in other words that they are based on the same possession public key, i.e., that *U*₁ = *U*₂ = ... *= Uₙ = U.* In more practical terms this means that a relying party can verify that all certificates are based on the same user cryptographic hardware device.

A prominent example where this importance occurs is when the certificate *C* is the user PID certificate. For instance, the user will often present her 'diploma' certificate not on its own to a relying party but together with her PID certificate. In such applications it is important that the relying party can verify that the public keys in both the PID and the 'diploma' certificate are based on the same cryptographic hardware device. In our context that means that the corresponding private possession keys are the same. Indeed, without this guarantee, two fraudulent users could conspire and let the diploma certificate of the second user be issued to the device of the first user, i.e., based on the PID certificate of the second user.

A simple way achieving this is by letting all public keys *P, P*₁*, P*₂ ..., *Pₙ* be the same. That is by letting both *u* = *u*₁ = *u*₂ = ... = *uₙ* and *K = K*₁ *= K*₂ = ... = *Kₙ.* However, this has both serious security and privacy drawbacks. An important security drawback of this setup is that a valid signature related to one certificate (and the public key bound therein) then automatically is a valid signature for all certificates. So, for instance, if a user uses her PID certificate to authenticate to a relying party (by signing a random challenge) as a natural person, the relying party could state the user actually used another certificate, e.g., one that lets the user authenticate as a representative of a company. This also means that dispute handling is complicated in this setup. An important privacy drawback of this setup is that this would make all the certificates linkable by the shared public key. Of course, when several certificates are issued including the PID certificate one can argue that this linking is not problematic as the PID itself is already linking the user. However, if a user only presents its diploma certificate at a relying party, then the user public key in the certificate would allow linking with other parties that possess the PID certificate. Especially when certificates hold (non-identifying) sensitive personal data this needs to be avoided as also follows from the privacy by design principle (also known as "data protection through technology design") from the [GDPR].

So, an improvement of [SECDSA] in which privacy is further enhanced is desirable.

### 3.2. Technical Solution

In a first aspect of the invention a method enabling a user generating a public/private keypair is provided. The method is based on an additive group (<G>, +) generated by a generator *G,* a first public key U in <G> of which the corresponding first private key u is unknown for the user and is bound in non-exportable and non-copiable form to cryptographic hardware in possession of the user, a second private key K under control of the user, with a corresponding second public key P=K.U in <G>, and a proof that the second public key P is formed this way, and a third private key K1 under control of the user, with a corresponding third public key P1=K1.U in <G>, wherein the user can form an additional proof that the second public key P and the third public key P1 are based on the first public key U, without the user revealing the first public key U by proving knowledge of the discrete logarithm of the third public key P1 with respect to the second public key P, and proving possession of a combined private key K1.u corresponding to the third public key P1.

Because the user can prove that the second public key P and the third public key P1 are based on the first public key U, without the user revealing the first public key U, the user can safely and securely authenticate herself to a third party, while keeping the first public key U confidential. Although the first public key need not be kept confidential from a conventional cryptographic point of view, the public key U can be considered to be personal data from a privacy point of view, and should therefore be treated confidentially, if possible. By applying the method according to the first aspect, the user can provide a third party with different public keys P and P1. The third party can verify the authenticity of the public key P1, while the user provides a proof of the authenticity of P. In this way, the third party need not know U, while the third party can authenticate the user. So, privacy may be enhanced while security is maintained.

It is noted that, when contrasting the method according to the first aspect with Protocol 1 of Dutch patent [SECDSA], the same security advantages may be achieved as in Protocol 1 of Dutch patent [SECDSA], without exposing the first public key U to a third party. This is in contrast to Protocol 1 of Dutch patent [SECDSA], where the first public key U is exposed to the third party. So, compared to Protocol 1 of Dutch patent [SECDSA], the method according to the first aspect allows for enhanced user privacy.

In a second aspect of the invention, a method for verifying a user generated public/private key pair is provided. The method is based on an additive group (<G>, +) generated by a generator G and comprises receiving a second public key P in <G>, receiving a proof that the second public key was formed as P=K.U, wherein K is a second private key under control of the user, U in <G> is a first public key of which the corresponding first private key u is unknown for the user and is bound in non-exportable and non-copiable form to cryptographic hardware in possession of the user, and q is an order of a group, receiving a third public key P1 in <G>, receiving a proof of knowledge of the discrete logarithm of the third public key P1 with respect to the second public key P, validating the proof of knowledge and validating that P1 is not the unity element of the group; if the validation is successful, sending a challenge to the user to prove possession of a private key corresponding to the public key P1; receiving and validating a result of the challenge; if the result of the challenge is successful, accepting the public key P1 as an authentic public key of the user.

The method according to the second aspect allows a third party to verify a user generated public/private key pair. In particular, it allows the third party to verify a key pair generated using the method according to the first aspect, without the third party needing to know the first public key U. Because the third party does not need to know, and does not know, the first public key U, user privacy may be enhanced, while security is not compromised.

In an embodiment the second private key K is based on an additional possession factor, a knowledge factor, such as a PIN, biometric information, other fixed information, and/or a combination thereof. These specific authentication types may be particularly advantageous in the context of the first and/or second aspect, because they allow for multi-factor authentication. These factors may be used in various ways. For example the cryptographic hardware can compute the resulting private keys K.u en K1.u by multiplication modulo the group order q and then use these in an application of the ECDSA algorithm. This way of working implies additional logic within the cryptographic hardware. Additionally and/or alternatively, the cryptographic hardware and/or an application A-APP calling the cryptographic hardware may verify the authentication, such as a PIN value, and block the entry of the authentication if the authentication is entered incorrectly more than a pre-specified number of times, for example more than three times. An advantage of such an approach is that it may simplify PIN management.

In an embodiment, the method further comprises digitally signing a massage M by: computing a hash e of the message M; converting the hash e to a value e' based on the second private key K; generating a digital signature H on the value e' based on the first private key u; generating a final digital signature H' based on the digital signature H and the second private key K. Optionally, the signature algorithm is based on DSA, ECDSA, EC-GDSA, EC-RDSA or variants thereof based on other groups in which the discrete logarithm problem is practically untraceable. An advantage of using such an algorithm, in particular an algorithm based on DSA, ECDSA, EC-GDSA, EC-RDSA or variants thereof based on other groups in which the discrete logarithm problem is practically untraceable, is that no additional logic in the cryptographic hardware is required. In addition, this may also enable convenient authentication (for example: PIN) management by having the authentication verified by the cryptographic hardware, and/or the application A-APP calling it, and blocking it when entered incorrectly too often. Furthermore, if the first private key u is access controlled using an additional authentication, such as a PIN, the key may be secured while only requiring limited additional logic in the cryptographic hardware and/or A-APP.

In an embodiment, an issuer of certificates can, simultaneously and in a data efficient manner, issue a large number of certificates to a user, wherein the certificates cannot be mutually linked based on their respective public keys, but are based on the same first private key u. This allows for the batchwise issuance of certificates. The private second private keys K may be all derived from a master key and limited additional data, which requires only limited storage, communication and/or processing. This enables a large number of key pairs and certificates, such that a user has a plurality of public keys available for different purposes.

In an embodiment an issuer of certificates can exchange a user certificate for a different user certificate based on the same first public key U. This allows a user to obtain a replacement certificate based on the first public key U, without enabling third parties to link the replacement certificate to an earlier certificate. This may enhance user privacy.

Further aspects of the invention relate to systems and/or computer programs enabling the various methods to be carried out, and/or to a computer-readable memory device, a computer-readable data carrier, a computer-readable storage medium, which may comprise a transitory and/or a non-transitory storage medium, for storing such computer programs, and/or to a data carrier signal carrying such computer programs.

### 4. Brief Description of the Drawings

Embodiments of the present invention will be described hereinafter, by way of example only, with reference to the accompanying drawings which are schematic in nature and therefore not necessarily drawn to scale. Furthermore, like reference signs in the drawings relate to like elements and a repeated description related thereto may be 5 omitted. In the attached figures,
- Figure 1 schematically shows a platform for generating a public/private keypair.
- Figure 2 schematically shows an electronic device.

### 5. Detailed description

The various embodiments used to describe the principles of the present disclosure are by way of illustration only and should not be construed in any way to limit the scope of the disclosure. For example, the skilled person will understand that the principles of the present disclosure may be implemented in any suitably arranged electronic device.

Let user public key P and corresponding private key p be formed according to Equation (1) and let ${p}_{1} = {K}_{1} . u ; {P}_{1} = {p}_{1} . G = {K}_{1} . u . G = {K}_{1} . U$ be another public/private keypair but based on the same possession public key *U.* Also suppose that the user has a proof *Pr* that public key *P* and corresponding private key *p* are formed according to Equation (1), e.g. by having followed Protocol 1 or by having a certificate *C* on public key *P* (possibly also holding user attributes) indicating that public key *P* is indeed formed according to Equation (1). The following algorithm shows that the user can also form a proof that the public key *P*₁ and corresponding private key *p*₁ are indeed formed according to Equation (1) based on same possession public key *U.*
**Algorithm 2**: Generation of a proof that *P*₁ and *p*₁ are based on the same possession key as public key *P* and corresponding private key *p.*
User input:
i. public key *P* and corresponding second private key *K*
ii. proof *Pr* that public key *P* is formed according to Equation (1)
iii. public key *P*₁ that is also formed according to Equation (1) based on same possession public key *U* as public key*P.*
User output: proof *Pr*₁ that *P*₁ is based on the same possession key as*P.*

Algorithm 2 works as follows. The user generates a (zero-knowledge) proof of knowledge *Pr*₁ that it knows the discrete logarithm of *P*₁ with respect to *P.* This proof of knowledge could be non-interactive or interactive following for instance [SCHNORR], [FIAT] and could also take as input a random challenge from a relying party allowing for its freshness. It could also be based on any other digital signature scheme based on knowledge of such a the discrete logarithm available to the skilled person, for example a scheme described in [ISO-14888-3]. A relying party that receives public key *P*₁ and the proof of knowledge *Pr*₁ then validates these whereby also validating that *P*₁ is not the unity element of the group *G* which for elliptic curve based groups is typically done automatically. If these validations are successful, the relying party can conclude that *P*₁*, p*₁ are based on the same possession key as *P, p.*

First of all, note that if public key *P*₁ and corresponding private key *p*₁ are also formed according to Equation (1) then *P*₁ *= K*₁*.U = K*₁*.K*^{*-*1}*.K.U = K₁.K*^{*-*1}*.P.* This means that the user indeed knows the discrete logarithms of *P*₁ with respect to *P* and can thus indeed form the proof of knowledge *Pr*₁*.* This proof of knowledge could be based on the technique of [SCHNORR], [FIAT] or any other suitable protocol or any digital signature scheme based on the knowledge of this discrete logarithm, cf. [ISO-14888-3].

For the converse implication, by the proof *Pr* the relying party knows that *P = K. U* for some key *K* known by the user and public key *U* bound to the user hardware through the corresponding private key *u.* From the proof *Pr*₁ it follows the user has knowledge of a private key *K'* such that *P*₁ *= K'. P.* So *P*₁ *= K'. K. U.* As *K'.K* is known by the user, it follows that *P*₁ is based on the same possession key, namely *U* just like *P.*

We remark that another user without possession of the hardware in which the possession private key *u* is stored, would be able to generate the proof *Pr*₁ with possession of the second private key *K*₁*,* e.g., by generating *K*₁ herself. However, as part of the use of the new public key *P*₁ or part of the issuance of a certificate on public key *P*₁*,* the other user would also have to prove possession of the ECDSA private key, e.g. by signing a random challenge generated by the relying party. The user in possession of the hardware in which the possession private key u is stored can follow Algorithm 1, however the other user cannot. Moreover, it follows from the security of the ECDSA signature scheme that if the other user were able to generate ECDSA signatures with the private key corresponding to public key *P*₁ this would imply that the other user has possession of this private key, i.e. *K*₁.*u.* As the other user has possession of *K*₁*,* this would imply that she also has possession of u which is, however, impossible even with possession of the hardware in which *u* resides as u is stored therein in a non-exportable and non-copyable form. It follows that public key *P*₁ is linked to the same possession public key *U* (and thus to the same cryptographic hardware) as the public key *P.*

Algorithm 2 can be used iteratively; based on a proof that a given public key is based on a possession public key *U,* i.e. meets Equation (1), this algorithm allows generating new public/private keypairs on the same possession public key *U* also including the proof that this is the case.

An application for issuing key pairs and/or certificates is as follows. The skilled person will appreciate that many variants exist. To elaborate on this; in this application the PID forms the hidden link with the possession public U used in the issuance of other certificates. The skilled person will appreciate that one could let other type of certificates fulfil this role. For instance, one can let this role be fulfilled by a dedicated "hardware foundation" certificate issued for the cryptographic hardware that does not contain any personal identification data at all but for instance only a statement on the certification of the cryptographic hardware. This "hardware foundation" certificate would then also used during the issuance of the PID certificate which arranges that the PID issuer does get knowledge of public key U which can be privacy beneficial in some cases. One can also issue several different versions of such "hardware foundation" certificates allowing each issuer to get its own "foundation" certificate which can also be privacy beneficial in some cases. Other variants are indicated further below.

As part of the PID certificate issuance the user proves her public key is in accordance with Equation (1) by following Protocol 1, i.e. based on revealing the possession public key *U* combined with key attestation. The PID certificate issuer indicates in the certificate its "hardware foundation", i.e., that the user public key is in accordance with Equation (1). This typically will be the only occasion where the possession public key *U* will ever be revealed to a party.

In the issuance of an additional certificate based on the PID:
a) the user presents her PID certificate, a public key *P*₁ to be bound in the certificate the user is applying for. The PID certificate indicates that the public key *P* in the PID certificate meets Equation (1) which is validated by the issuer of the additional certificate.
b) the user shows to the issuer possession of the private keys corresponding to public keys *P,P*₁ and that these public keys are based on the same possession public key as the PID certificate, the latter uses Algorithm 2.
c) If successful, the issuer would then issue a new certificate *C*₁ based on public key *P*₁ also including some user attributes specific to the issuer.

As part of presentation of certificate *C*₁ to a relying party the user then also presents its PID certificate and uses Algorithm 2 again to prove that both are based on the same possession public key, i.e. user hardware. In practice, this could comprise three proofs of knowledge/ signatures generated by the user on a (random) challenge C generated by a relying party:
i. one related to the user public key *P* in the PID,
ii. one based on the related to the user public key *P*₁ in certificate *C*₁ and
iii. one incorporated in the proof of knowledge outputted in Algorithm 2.

The incorporation under iii. can be based by letting challenge C be used in the random number *e* used in the (interactive) Authentication Protocol in [SCHNORR] or similarly in the non-interactive protocol variant thereof based on [FIAT]. The proof of knowledge/ signature under iii. could also be based on a digital signature algorithm. For instance, it could be based on any of the algorithms in [ISO-14888-3] where the user public key in the PID acts as a group generator and where the user public key in certificate *C*₁ is seen as public key with respect to this group generator. Indeed; the corresponding signature then is a proof of knowledge that the user has possession of the discrete logarithm of *P*₁ with respect to *P* as required in Algorithm 2. So, if the PID and certificate *C*₁ signature schemes are all based on ECDSA, this would constitute of three ECDSA signatures. One can further argue that the signature of type ii related to the user public key *P*₁ in certificate *C*₁ is not strictly necessary. Indeed, one can argue that the issuer of certificate *C*₁ has verified that the user public key *P*₁ is based on a possession based public key. If this would be a different possession public key than the one user public key *P* is based on, then the user would not be able to generate the proof of knowledge/ signature under iii. Indeed, if the user would be able to do so, this would indicate that the user can determine the discrete logarithm of user public *P*₁ to two different possession public keys. This implies that the user is able also to determine the discrete logarithm of one possession public keys with respect to the other, which is impossible given that possession public keys are assumed to be generated in a secure and random way. This efficient construction places more trust in that the issuers properly validate that certificates are indeed based on the same public key, e.g. the user public key in the PID and the user public key in the newly issued certificate.

These constructions indicated above extend to the situation of a number *n* of certificates based on (the same) possession public key. The less efficient requires 2. *n* - 1 signatures and the more efficient implementation would require only *n* signatures and but places more trust in the certificate issuers.

As indicated above use cases exist where it is beneficial from a privacy perspective that the user can present certificate *C*₁ without also presenting the PID certificate and whereby the relying party only needs to be assured that certificate *C*₁ is linked to the hardware also holding the PID certificate of the user.

To achieve this one can let the issuer indicate in Step c) above that certificate *C*₁ is based on a PID certificate and is accordance with Equation (1) based on the same possession public key as in the PID certificate. In this way the user would no longer be required to present the PID certificate which can have significant privacy benefits. Moreover, the issuer could periodically check, e.g., every hour, if the PID certificate used during the issuance is revoked by the PID issuer and revoke certificate *C*₁ if this is the case. In this way relying parties always know certificate *C*₁ is still linked to a valid PID certificate through the user cryptographic hardware. In case of disputes between the user and a relying party, the issuer would be required to provide the PID certificate that formed the basis for certificate *C*₁. This requires the issuer to maintain a reliable archive of events but this is already required by commonly used standards such as [ETSI-319 411].

Various embodiments also make it conveniently possible to let a certificate issuer, including the PID issuer, issue many certificates during the issuing process, i.e., a batch. This is done by letting the user present not only one public key but many public keys, all with different second keys *K.* These different keys *K* could for instance be derived from one master key and some sequence numbers so that this would not require much storage for the user application. In principle the application would only need to store some static data and the certificate signatures and serial numbers allowing the user to reconstruct the certificates him/herself. To illustrate, an ECDSA signature related to a 256 bit private key is 2x256 = 512 bits or 64 byte in size. As mandated by various standards a certificate serial number is at most 20 bytes in size so by also adding some overhead data we conclude that the storage of a certificate costs less than 100 bytes. This means that storing 10.000 (PID) certificates would only cost 1 megabyte which is quite modest for modern mobile devices. Note that all such certificates are not linkable by their public keys as these are all essentially different for third parties. Also note, that all of these PID certificates could all contain one common number which used to revoke the whole batch by only putting this number on a revocation list instead of all individual serial numbers.

According to various embodiments, issuers may implement a "certificate swapping service" for users, which takes as user input a previously issued certificate plus a new public key and outputs a fresh certificate on the same attributes on the new public key on success. For success the user has to demonstrate that the input certificate is valid, that the user has possession of both the old and new public keys (and is thus the holder of the certificate) and that the old and new public keys are based on the same possession public key using Algorithm 2. As explained above, the issuer could also conveniently issue a complete batch, of say 10.000, of such new certificates.

It is noted that in Dutch patent [SECDSA] the second private key *K* mentioned in Algorithm 1 is based on either a knowledge or a biometric factor. However, according to various embodiments, the private key *K* could also be solely based on information stored inside the user application or be derived from such information using another key stored in hardware, e.g., by following one of the PIN-binder algorithms in Dutch patent [SECDSA] using the static information instead of the user PIN. The private key *K* could also be solely based on secret user information encrypted with a cryptographic key stored in the inside the user application.

Figure 1 schematically shows a platform for generating a public/private keypair. Figure 2 schematically shows a block diagram of an electronic device that may be used as the platform of Figure 1.

The platform schematically shown in Figure 1 may be an electronic device under control of the user, for example a personal electronic device. Personal electronic devices include, but are not limited to, smart watches, smartphones, tablets, laptops, and/or personal computers.

The platform schematically shown in Figure 1 comprises limited cryptographic hardware, an authenticator application, and an operating system (OS). The skilled person appreciates that the platform may comprise further components. Some or all of these components may be combined into a single component and/or distributed over multiple components. Some or all of these components may be implemented using software, for example in software stored in a memory of the platform.

Figure 2 schematically shows an electronic device 200 including a processor 210, memory 220, an input/output module 230, and cryptographic hardware 240. Although Figure 5 shows these components as a single device, the skilled person appreciates that these components may alternatively be distributed over multiple devices working together. Conceptually, these multiple devices working together may be considered as a single device.

For example, the platform schematically shown in Figure 1 may be an electronic device schematically shown in Figure 2.

The processor 210 is configured to control the electronic device 200. The processor 210 controls the various components of the electronic device 200 and may perform various computations. The processor 210 can process and/or manipulate data stored in the memory 220 and can be controlled through software stored in the memory 220.

The processor 210 may include one or more of a central processing unit (CPU) application processor (AP), a graphics processing unit (GPU), a neural processing unit (NPU), and/or any other kind of processor.

The memory 220 may comprise volatile memory and/or non-volatile memory.

Examples of volatile memory include various kinds of random available memory, RAM, such as dynamic RAM (DRAM), static RAM (SRAM), or synchronous dynamic RAM (SDRAM)). Volatile memory may be cache memory and/or internal memory. Examples of a non-volatile memory include flash memory, a hard drive, or a solid state drive (SSD).

One or more computer programs may be stored in the memory 220 as software, and may include, for example, an operating system (OS) and/or an application, such as an A-APP.

The OS is software responsible for generally controlling the electronic device 500. For example, the OS may allocate capacity of the processor 210, as well as parts of the memory 220 to various software programs running on the device. Specifically, the OS may assign one or more processor threads for executing a software program and may assign various priorities to threads, such that processor resources are allocated accordingly.

In addition, the OS may manage communication between the A-APP and the cryptographic hardware 240.

The input/output module 230 may obtain a command or data to be used by another component (such as the processor 210) of the electronic device 200, from outside of the electronic device 200. The input/output module 230 may comprise at least one of a keyboard, a touch screen, a microphone, a mouse, a touch pad, a biometric sensor, and/or a camera. A user of the electronic device 200 may input authentication information, such as a PIN or biometric information, via the input/output module 230.

For example, a user may provide a text input via the keyboard or touch screen. The text input may comprise a password and/or a PIN. A user may provide an audio input, such as a speech input, via the microphone. The speech input may comprise a password, a PIN, and/or biometric information, such as the sound of the user's voice. A user may provide a visual input via the camera. The visual input may comprise a password, a PIN, and/or biometric information, such as the shape of the user's face. The biometric sensor may comprise, for example, a fingerprint scanner, so that a user may provide his/her fingerprint as biometric input.

The input/output module 230 may be built in to the electronic device 200. Additionally or alternatively, the input/output module 230 may comprise an external input and/or output module, that can be connected to the electronic device 200 wiredly and/or wirelessly, for example via Bluetooth.

In addition, the input/output module 230 may be configured to communicate with an external electronic device, for example a server of a relying party and/or a certificate issuer. This communication will typically be via the Internet. The skilled person is aware of various ways in which an electronic device may connect to the Internet. For example, the input/output module may comprise one or more antennas and/or LAN ports.

The input/output module 230 may comprise at least one of a speaker, a display, a hologram device, a projector, a haptic module, or a printer. For example, if the input/output module 230 comprises a touch screen, the touch screen may be suitable for both input and output.

The cryptographic hardware 240 may comprise a dedicated processor and/or memory. Additionally or alternatively, the cryptographic hardware 240 may be integrated into the processor 210. The cryptographic hardware 240 is tamper-proof hardware that can be relied upon by the user and third parties to be safe and in which a unique private key for the electronic device 200 can be stored. In other words, because the electronic device 200 comprises the cryptographic hardware 240, the electronic device 200 can be used as a possession factor for security purposes.

Typically, the cryptographic hardware 240 has relatively limited computing capacity. Therefore, it may be beneficial to only perform security-critical operation in the cryptographic hardware 240, while letting the processor 210, using the memory 220, perform non-security-critical operations.

In a typical application, both the certificate issuer and the relying party will use servers to communicate with the platform and to perform the various method steps by these parties. The skilled person is well aware of what servers are and how they function.

In the foregoing description, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

In this document and in its claims, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. The verbs "to include" and "to comprise" and their conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "or" is usually used as an inclusive or, meaning and/or, unless the context clearly requires that "or" is used as an exclusive or. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. Terms such as "first" or "second" may simply be used to distinguish the component from other components in question, and do not limit the components in other aspects (such as importance or order). The term "configured to" as used herein may be interchangeable with, for example, the term "suitable for", "having the capacity to", "designed to", "adapted to", "made to", or "capable of" in hardware or software under circumstances. In some cases, the expression "a device configured to" may mean that a device is "capable of" with another device or part. For example, "a processor configured to execute A, B, and C" may mean a dedicated processor (for example, an embedded processor) for performing the corresponding operations or a general purpose processor for performing the corresponding operations by executing one or more software programs stored in a memory. Furthermore, the skilled person appreciates that "a processor configured to execute A, B, and C" may not necessarily mean that a single and/or the same processor is configured to execute A, B, and C, but that it is also possible that different processors execute A, B, or C.

### References:

[DSA] Digital Signature Standard (DSS), FIPS 186-4, National Institute of Standards and Technology (NIST), July 2013.
[eIDAS-2014] Electronic identification and trust services for electronic transactions in the internal market and repealing Directive 1999/93/EC, regulation 910/2014, the European Parliament and the Council of the European Union, 2014.
[eIDAS-update] Regulation of the European parliament and of the council amending Regulation (EU), No 910/2014 as regards establishing a framework for a European Digital Identity, 2021/0136, 3 June 2021.
[ETSI-319 411] Policy and security requirements for Trust Service Providers issuing certificates (several parts). See https://www.etsi.org.
[FIAT] How To Prove Yourself: Practical Solutions to Identification and Signature Problems, A. Fiat, A. Shamir, Proceedings on Advances in cryptology-CRYPTO '86, Lecture Notes in Computer Science, Volume 263, 1986, p. 186-194.
[GDPR] On the protection of natural persons with regard to the processing of personal data and on the free movement of such data, and repealing Directive 95/46/EC (General Data Protection Regulation), regulation 2016/679, European Parliament and the Council of the European Union, 27 April 2016.
[ISO-14888-3] Digital signatures with appendix - Part 3: Discrete logarithm based mechanisms, International Organization for Standardization (ISO), September 2014.
[ISO 18013-5] Personal identification - ISO-compliant driving licence - Part 5: Mobile driving license (mDL) application, International Organization for Standardization (ISO), 2021.
[NIST-180-4] Secure Hash Standard (SHS), National Institute of Standards and Technology (NIST), FIPS PUB 180-4, August 2015
[NIST-800-38B] Recommendation for Block Cipher Modes of Operation: The CMAC Mode for Authentication, National Institute of Standards and Technology (NIST), Special Publication 800-38B, May 2005.
[SCHNORR] Efficient signature generation for smart cards, C. P. SCHNORR, Journal of Cryptology, Volume 4 Issue 3, January 1991.
[SECDSA] "METHOD FOR ELECTRONIC SIGNING AND AUTHENTICATON STRONGLY LINKED TO THE AUTHENTICATOR FACTORS POSSESSION AND KNOWLEDGE", Dutch patent number 1043779.
[STINSON] Cryptography: theory and practice, D.G. STINSON, CRC press, 1995.
[VC] Verifiable Credentials Data Model, https://www.w3.org/TR/vc-data-model/
[X.509] Public-key and attribute certificate frameworks, International Telecommunication Union (ITU). See https://www.itu.int.

## Claims

1. A method enabling a user to generate a public/private keypair based on:
a) an additive group (<G>, +) generated by a generator G,
b) a first public key U in <G> of which the corresponding first private key u is unknown for the user and is bound in non-exportable and non-copiable form to cryptographic hardware in possession of the user,
c) a second private key K under control of the user, with a corresponding second public key P=K.U in <G>, and a proof that the second public key P is formed this way, and
d) a third private key K1 under control of the user, with a corresponding third public key P1=K1.U in <G>,
**characterized in that** the user forms an additional proof that the second public key P and the third public key P1 are based on the first public key U, without the user revealing the first public key U by
i. proving knowledge of the discrete logarithm of the third public key P1 with respect to the second public key P, and
ii. proving possession of a combined private key K1.u corresponding to the third public key P1 by providing a reply to a received challenge.

2. A method based on an additive group (<G>, +) generated by a generator G for verifying a user generated public/private key pair, comprising:
receiving a second public key P in <G>,
receiving a proof that the second public key was formed as P=K.U, wherein K is a second private key under control of the user, U in <G> is a first public key of which the corresponding first private key u is unknown for the user and is bound in non-exportable and non-copiable form to cryptographic hardware in possession of the user,
receiving a third public key P1 in <G>,
receiving a proof of knowledge of the discrete logarithm of the third public key P1 with respect to the second public key P,
validating the proof of knowledge and validating that P1 is not the unity element of the group;
if the validation is successful, sending a challenge to the user to prove possession of a private key corresponding to the public key P1;
receiving and validating a result of the challenge;
if the result of the challenge is successful, accepting the public key P1 as an authentic public key of the user.

3. The method according to claim 1, wherein the second private key K is based on an additional possession factor, a knowledge factor, such as a PIN, biometric information, other fixed information, and/or a combination thereof.

4. The method according to claim 1 or claim 3, further comprising digitally signing a massage M by:
a) computing a hash e of the message M;
b) converting the hash e to a value e' based on the second private key K;
c) generating a digital signature H on the value e' based on the first private key u;
d) generating a final digital signature H' based on the digital signature H and the second private key K.

5. The method according to claim 4, wherein a signature algorithm is based on DSA, ECDSA, EC-GDSA, EC-RDSA or variants thereof based on other groups in which the discrete logarithm problem is practically untraceable.

6. The method according to any one of the preceding claims, wherein an issuer of certificates can, simultaneously and in a data efficient manner, issue a large numberD1 of certificates to a user, wherein the certificates cannot be mutually linked based on their respective public keys, but are based on the same first private key u.

7. The method according to any one of claims 1-5, wherein an issuer of certificates can exchange a user certificate for a different user certificate based on the same first public key U.

8. A system comprising means for carrying out the method according to any one of the preceding claims.

9. A computer program comprising instructions which, when the program is executed by a computer, cause the computer to carry out the method according to any one of claims 1-7.

10. A computer-readable data carrier having stored thereon the computer program according to claim 9.

## Patentansprüche

1. Verfahren, das es einem Benutzer ermöglicht, ein öffentliches/privates Schlüsselpaar zu erzeugen, basierend auf:
a) einer additiven Gruppe (<G>, +), die von einem Generator G erzeugt wird,
b) einem ersten öffentlichen Schlüssel U in <G>, von dem der entsprechende erste private Schlüssel u für den Benutzer unbekannt ist und in nicht exportierbarer und nicht kopierbarer Form an kryptografische Hardware im Besitz des Benutzers gebunden ist,
c) einem zweiten privaten Schlüssel K unter Kontrolle des Benutzers, mit einem entsprechenden zweiten öffentlichen Schlüssel P = K.U in <G> und einem Nachweis, dass der zweite öffentliche Schlüssel P auf diese Weise gebildet ist, und
d) einem dritten privaten Schlüssel K1 unter Kontrolle des Benutzers, mit einem entsprechenden dritten öffentlichen Schlüssel P1 = K1.U in <G>,
**dadurch gekennzeichnet, dass** der Benutzer einen zusätzlichen Nachweis bildet, dass der zweite öffentliche Schlüssel P und der dritte öffentliche Schlüssel P1 auf dem ersten öffentlichen Schlüssel U basieren, ohne dass der Benutzer den ersten öffentlichen Schlüssel U offenlegt, durch
i. Nachweisen der Kenntnis des diskreten Logarithmus des dritten öffentlichen Schlüssels P1 in Bezug auf den zweiten öffentlichen Schlüssel P, und
ii. Nachweisen des Besitzes eines kombinierten privaten Schlüssels K1.u, der dem dritten öffentlichen Schlüssel P1 entspricht, durch Bereitstellen einer Antwort auf eine empfangene Challenge.

2. Verfahren, basierend auf einer additiven Gruppe (<G>, +), die von einem Generator G erzeugt wird, zum Verifizieren eines von einem Benutzer erzeugten öffentlichen/privaten Schlüsselpaars, umfassend:
Empfangen eines zweiten öffentlichen Schlüssels P in <G>,
Empfangen eines Nachweises, dass der zweite öffentliche Schlüssel als P = K.U gebildet wurde, wobei K ein zweiter privater Schlüssel unter Kontrolle des Benutzers ist, U in <G> ein erster öffentlicher Schlüssel ist, von dem der entsprechende erste private Schlüssel u für den Benutzer unbekannt ist und in nicht exportierbarer und nicht kopierbarer Form an kryptografische Hardware im Besitz des Benutzers gebunden ist,
Empfangen eines dritten öffentlichen Schlüssels P1 in <G>,
Empfangen eines Nachweises der Kenntnis des diskreten Logarithmus des dritten öffentlichen Schlüssels P1 in Bezug auf den zweiten öffentlichen Schlüssel P,
Validieren des Nachweises der Kenntnis und Validieren, dass P1 nicht das Einheitselement der Gruppe ist;
falls die Validierung erfolgreich ist, Senden einer Challenge an den Benutzer zum Nachweisen des Besitzes eines dem öffentlichen Schlüssel P1 entsprechenden privaten Schlüssels;
Empfangen und Validieren eines Ergebnisses der Challenge;
falls das Ergebnis der Challenge erfolgreich ist, Akzeptieren des öffentlichen Schlüssels P1 als authentischen öffentlichen Schlüssel des Benutzers.

3. Verfahren nach Anspruch 1, wobei der zweite private Schlüssel K auf einem zusätzlichen Besitzfaktor, einem Wissensfaktor wie einer PIN, biometrischen Informationen, anderen festen Informationen und/oder einer Kombination davon basiert.

4. Verfahren nach Anspruch 1 oder Anspruch 3, ferner umfassend digitales Signieren einer Nachricht M durch:
a) Berechnen eines Hashes e der Nachricht M;
b) Umwandeln des Hashes e in einen Wert e' basierend auf dem zweiten privaten Schlüssel K;
c) Erzeugen einer digitalen Signatur H über den Wert e' basierend auf dem ersten privaten Schlüssel u;
d) Erzeugen einer endgültigen digitalen Signatur H' basierend auf der digitalen Signatur H und dem zweiten privaten Schlüssel K.

5. Verfahren nach Anspruch 4, wobei ein Signaturalgorithmus auf DSA, ECDSA, EC-GDSA, EC-RDSA oder Varianten davon basiert, die auf anderen Gruppen basieren, in denen das Problem des diskreten Logarithmus praktisch unlösbar ist.

6. Verfahren nach einem der vorhergehenden Ansprüche, wobei ein Aussteller von Zertifikaten gleichzeitig und in dateneffizienter Weise eine große Anzahl von Zertifikaten an einen Benutzer ausstellen kann, wobei die Zertifikate basierend auf ihren jeweiligen öffentlichen Schlüsseln, nicht miteinander verknüpft werden können, jedoch auf demselben ersten privaten Schlüssel u basieren.

7. Verfahren nach einem der Ansprüche 1 bis 5, wobei ein Aussteller von Zertifikaten ein Benutzerzertifikat gegen ein anderes Benutzerzertifikat austauschen kann, das auf demselben ersten öffentlichen Schlüssel U basiert.

8. System, umfassend Mittel zum Ausführen des Verfahrens nach einem der vorhergehenden Ansprüche.

9. Computerprogramm, umfassend Anweisungen, die, wenn das Programm von einem Computer ausgeführt wird, den Computer veranlassen, das Verfahren nach einem der Ansprüche 1 bis 7 auszuführen.

10. Computerlesbarer Datenträger, auf dem das Computerprogramm nach Anspruch 9 gespeichert ist.

## Revendications

1. Procédé permettant à un utilisateur de générer une paire de clés publique/privée basé sur :
a) un groupe additif (<G>, +) engendré par un générateur G,
b) une première clé publique U dans <G> dont la première clé privée correspondante u est inconnue pour l'utilisateur et est liée sous une forme non exportable et non copiable au matériel cryptographique en possession de l'utilisateur,
c) une seconde clé privée K sous le contrôle de l'utilisateur, avec une seconde clé publique correspondante P=K.U dans <G>, et une preuve que la seconde clé publique P est formée de cette manière, et
d) une troisième clé privée K1 sous le contrôle de l'utilisateur, avec une troisième clé publique correspondante P1=K1.U dans <G>,
**caractérisée en ce que** l'utilisateur forme une preuve supplémentaire que la deuxième clé publique P et la troisième clé publique P1 sont basées sur la première clé publique U, sans que l'utilisateur ne révèle la première clé publique U par
i. prouver la connaissance du logarithme discret de la troisième clé publique P1 par rapport à la deuxième clé publique P, et
ii. prouver la possession d'une clé privée combinée K1.u correspondant à la troisième clé publique P1 en fournissant une réponse à un défi reçu.

2. Procédé basé sur un groupe additif (<G>, +) généré par un générateur G pour vérifier une paire de clés publique/privée générée par l'utilisateur, comprenant :
recevoir une deuxième clé publique P dans <G>,
recevoir une preuve que la deuxième clé publique a été formée comme P=K.U, où K est une deuxième clé privée sous le contrôle de l'utilisateur, U dans <G> est une première clé publique dont la première clé privée correspondante U est inconnue pour l'utilisateur et est liée sous une forme non exportable et non copiable au matériel cryptographique en possession de l'utilisateur,
recevoir une troisième clé publique P1 dans <G>,
recevoir une preuve de connaissance du logarithme discret de la troisième clé publique P1 par rapport à la deuxième clé publique P,
valider la preuve de connaissance et valider que P1 n'est pas l'élément unitaire du groupe ;
si la validation réussit, envoyer un défi à l'utilisateur pour prouver la possession d'une clé privée correspondant à la clé publique P1 ;
recevoir et valider le résultat du défi ;
si le résultat du défi est positif, accepter la clé publique P1 comme clé publique authentique de l'utilisateur.

3. Procédé selon la revendication 1, où la deuxième clé privée K est basée sur un facteur de possession supplémentaire, un facteur de connaissance, tel qu'un code PIN, des informations biométriques, d'autres informations fixes et/ou une combinaison de ceux-ci.

4. Procédé selon la revendication 1 ou la revendication 3, comprenant en outre la signature numérique d'un message M par :
a) calculer un hachage e du message M ;
b) convertir le hachage e en une valeur e' basée sur la deuxième clé privée K ;
c) générer une signature numérique H sur la valeur e' basée sur la première clé privée u ;
d) générer une signature numérique finale H' basée sur la signature numérique H et la deuxième clé privée K.

5. Procédé selon la revendication 4, où un algorithme de signature est basé sur DSA, ECDSA, EC-GDSA, EC-RDSA ou des variantes de ceux-ci basées sur d'autres groupes dans lesquels le problème du logarithme discret est pratiquement intraçable.

6. Procédé selon l'une quelconque des revendications précédentes, où un émetteur de certificats peut, simultanément et de manière efficace en termes de données, émettre un grand nombre D1 de certificats à un utilisateur, où les certificats ne peuvent pas être liés mutuellement sur la base de leurs clés publiques respectives, mais sont basés sur la même première clé privée u.

7. Procédé selon l'une quelconque des revendications 1 à 5, où un émetteur de certificats peut échanger un certificat utilisateur contre un certificat utilisateur différent basé sur la même première clé publique U.

8. Système comprenant des moyens pour mettre en œuvre le procédé selon l'un quelconque des revendications précédentes.

9. Programme informatique comprenant des instructions qui, lorsque le programme est exécuté par un ordinateur, amènent l'ordinateur à mettre en œuvre le procédé selon l'une quelconque des revendications 1 à 7.

10. Support des données lisible par ordinateur sur lequel est stocké le programme informatique selon la revendication 9.
